# DEMANDE DE BREVET EUROPEEN

(11) **EP 0 610 880 A1**
(43) Date de publication de la demande: **17.08.1994**
(21) Numéro de dépôt: 94101884.8
(22) Date de dépôt: 08.02.1994
(51) Int. Cl.: H04B 3/54

(54) **Circuit pour connecter un modem dans un système de communications par courant porteur sur le réseau d'alimentation**

(30) Priorité: 10.02.1993 FR 9301515
(71) Demandeur: MOULINEX S.A., F-93170 Bagnolet (FR)
(72) Inventeur: Oubassou, Hassan, F-50000 Saint-Lo (FR)
(74) Mandataire: May, Hans Ulrich, Dr.

(57) **Abrégé**

L'invention concerne un modem destiné à équiper des émetteurs-récepteurs connectés à un réseau alternatif de distribution électrique et adaptés à contrôler, au moyen d'un signal véhiculé par le réseau, le fonctionnement d'appareils électriques d'une habitation, et comprenant un transformateur (1) de couplage présentant un étage primaire (2) connecté aux bornes du réseau d'alimentation et un étage secondaire (3) branché au moyen d'un circuit de liaison (4) à un étage d'entrée (7) et à un étage de sortie (8) d'une unité de traitement de signal (5).

Selon l'invention, le modem comprend en outre des moyens de changement automatique de son impédance d'entrée, pilotés par ladite unité de traitement de sorte que l'impédance soit plus grande en réception qu'en émission.

## Description

L'invention concerne un modem destiné à équiper des émetteurs-récepteurs connectés à un réseau alternatif d'alimentation électrique et adaptés à contrôler, au moyen d'un signal véhiculé par le réseau, le fonctionnement d'appareils électriques d'une habitation, et comprenant un transformateur de couplage présentant un étage primaire dont les bornes de branchement P et N sont connectées aux bornes du réseau d'alimentation et un étage secondaire branché au moyen d'un circuit de liaison à un étage d'entrée et à un étage de sortie d'une unité de traitement de signal.

Dans des modems connus, un étage d'entrée ou de réception et un étage de sortie ou d'émission sont reliés au réseau d'alimentation électrique par l'intermédiaire d'un transformateur de couplage qui, au-delà de son rôle d'isolation, constitue également un filtre passe-bande pour les signaux modulés véhiculés par le réseau. Pour l'obtention d'un signal d'émission-réception de qualité, il est nécessaire que l'impédance à la réception soit très grande et que l'impédance soit faible pour l'émission.

Le problème qui se pose pour des systèmes existants est de concilier ces deux impératifs. En fait, ce problème n'est pas lié à la géométrie des circuits et se pose indépendamment du branchement des étages d'entrée et de sortie sur le même enroulement secondaire du transformateur ou sur des enroulements différents.

Des solutions pour une meilleure sensibilité ont été envisagés, et notamment la réalisation d'un enroulement secondaire avec une prise médiane pour l'étage de sortie. Néanmoins, le problème reste le même : l'impédance faible de l'étage de sortie et celle plus élevée de l'étage d'entrée sont d'une manière ou d'une autre en parallèle. L'impédance résultante mesurée aux bornes de branchement du modem est donc conditionnée par l'impédance de l'étage de sortie . Le modem constitue avec la ligne un diviseur de tension, ainsi, si son impédance est trop faible, le signal reçu sera très faible également. Si par contre l'impédance est grande, il est nécessaire par ailleurs d'augmenter la puissance d'émission ou de s'accommoder avec une émission plus faible et donc de portée moindre.

Le but de la présente invention est de résoudre ces problèmes de manière simple et économique.

Selon l'invention le modem comprend en outre des moyens de changement automatique de son impédance aux bornes P et N, pilotés par ladite unité de traitement de sorte que l'impédance soit plus forte en réception qu'en émission.

Grâce à l'invention, l'impédance du modem est toujours parfaitement adaptée à son mode de fonctionnement, émission ou réception.

Les caractéristiques et avantages de l'invention ressortiront d'ailleurs de la description qui va suivre, pris à titre d'exemple non limitatif, en référence aux dessins dans lesquels :

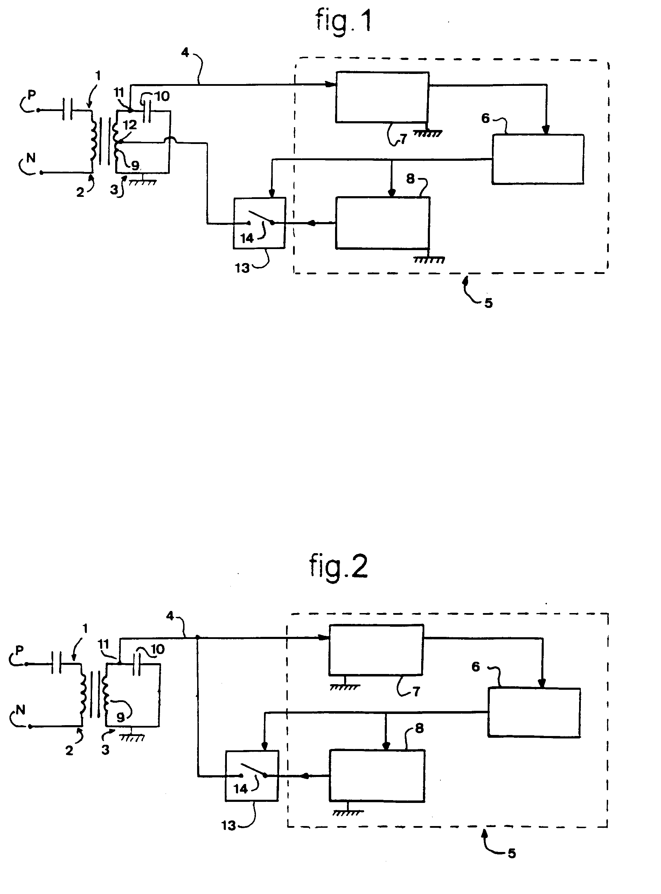

La figure 1 est une vue schématique d'un modem selon l'invention ; la figure 2 est une vue schématique d'une variante de la réalisation de la figure 1.

Le modem schématisé aux figures 1 et 2 est destiné à équiper des émetteurs-récepteurs connectés à un réseau alternatif de distribution électrique et adaptés à contrôler, au moyen d'un signal véhiculé par le réseau, le fonctionnement d'appareils électriques d'une habitation. Ce modem comprend un transformateur de couplage 1 présentant un étage primaire 2 dont des bornes de branchement P et N sont connectées aux bornes du réseau d'alimentation, et un étage secondaire 3 branché au moyen d'un circuit de liaison 4 à un étage d'entrée 7 et à un étage de sortie 8 d'une unité de traitement de signal 5.

L'unité de traitement 5 comprend un microprocesseur 6 relié à un étage d'entrée ou de réception 7 et à un étage de sortie ou d'émission 8. Les signaux entrants modulés sont dirigés vers l'étage d'entrée 7. Après démodulation, une information numérique est envoyée au microprocesseur 6 de l'unité de traitement 5 . Après gestion de cette information, ou en réponse à d'autres informations provenant de différents capteurs mesurant des grandeurs physiques telles que par exemple la température, ou encore suite à l'exécution d'ordres programmés, le microprocesseur 6 envoie à l'étage de sortie 8 une information numérique logique. L'étage de sortie 8 transforme cette information en un signal modulé analogique qui sera transmis sur le réseau de distribution de courant via le transformateur 1.

Le circuit de liaison 4 relie les étages d'entrée 7 et de sortie 8 de l'unité de traitement 5 à l'étage secondaire 3 du transformateur 1 comportant un enroulement secondaire 9 et une capacité 10 réalisant avec la self-induction de l'enroulement 9 un circuit accordé. Il est possible de relier l'étage d'entrée 7 et l'étage de sortie 8 de l'unité de traitement 5 respectivement en une prise extrême 11 et une prise médiane 12 de l'enroulement secondaire 9 du transformateur 1 (figure 1) ou de les relier avec un seul conducteur (figure 2) en une même borne. Comme on le voit sur les figures, le retour de courant peut avantageusement se faire par la masse.

Le modem est en fait un système ayant deux fonctions et deux comportements que l'on peut distinguer. Lorsqu'il est en réception, il se comporte comme une charge appliquée à une ligne de transmission, qui en l'occurrence est le réseau de distribution électrique, et son impédance mesurée au bornes P et N est considérée comme une impédance d'entrée. Par contre, lorsque le modem est en émission, il se comporte comme un générateur de signaux et son impédance est considérée comme une impédance de sortie.

Pour transmettre efficacement le signal modulé, il faut que le modem présente une impédance de sortie faible par rapport au réseau véhiculant le signal. Effectivement, comme il n'est pas possible de disposer de générateurs de signal porteur de très grande puissance, il est intéressant de disposer d'une très faible impédance à l'émission de manière à transmettre le signal avec une amplitude maximale. A l'inverse, en réception, le modem doit présenter une grande impédance. Lorsque le modem est relié à la ligne de transmission ,c'est à dire au réseau de distribution électrique, son impédance d'entrée constitue avec l'impédance de la ligne un diviseur de tension ; par conséquent, pour que le signal reçu soit d'amplitude maximale, il faut que impédance du modem soit très grande.

Selon l'invention, le modem comprend des moyens de changement automatique de son impédance aux bornes P et N, pilotés par ladite unité de traitement de sorte que l'impédance soit plus grande en réception qu'en émission.

Les moyens de changement d'impédance sont ainsi liés au fonctionnement instantané du modem. Lorsque le modem est en veille, et donc à l'écoute d'un signal afférent, l'impédance d'entrée est élevée, et, lorsque l'unité de traitement est en état d'envoyer un signal, l'impédance de sortie est faible.

Les moyens de changement automatique d'impédance 13 comprennent un interrupteur 14 monté dans le circuit de liaison, ledit interrupteur 14 pouvant occuper deux états : soit un état fermé dans lequel l'étage de sortie 8 est relié au transformateur 1, soit un état ouvert dans lequel l'étage de sortie 8 est isolé. A chaque mode de fonctionnement du modem correspond un état de l'interrupteur. Le microprocesseur 6, relié à l'étage de sortie 8 et à une interface de commande de l'interrupteur 14, est adapté à délivrer un signal logique destiné, d'une part, à moduler le signal d'émission et, d'autre part, à commander l'ouverture et la fermeture de l'interrupteur 14 de manière qu'il soit dans un état fermé lorsque le modem est en émission et dans un état ouvert lorsque le modem n'est pas en émission.

Lorsque le microprocesseur 6 de l'unité de traitement 5 délivre une information numérique de transmission, une trame constituée d'une succession de bits d'information 1 ou 0 est appliquée à une unité de modulation de l'étage de sortie 8 qui génère un signal porteur. La même information numérique est envoyée à une interface de commande de la fermeture de l'interrupteur 14. La fermeture s'opère en réponse à la détection d'un état logique de l'information du microprocesseur correspondant à la transmission d'un signal. Par exemple, si l'état logique 0 correspond à l'existence d'une porteuse, l' interrupteur 14 sera fermé pour chaque bit ayant la valeur 0.

De façon avantageuse, l'interrupteur 14 est réalisé à partir d'un transistor de type PNP et d'un transistor de type NPN montés tête-bêche. Cette forme de réalisation bien connue permet de commander directement l'état de l'interrupteur 14 en appliquant le signal logique, mis en forme, sur les bases respectives des transistors.

L'étage d'entrée 7 de l'unité de traitement 5 présente une grande impédance et l'étage de sortie 8 présente une impédance plus faible. Quand l'interrupteur 14 est ouvert, seul l'étage d'entrée 7 de grande impédance est relié au transformateur 1 et il en résulte que le modem présente une grande impédance d'entrée, ce qui permet de recevoir un signal avec une amplitude confortable. A l'inverse, quand l'interrupteur 14 est fermé, l'étage de sortie 8 de l'unité de traitement 5 est également branchée sur l'enroulement secondaire 9 du transformateur 1. Que ce branchement soit effectué sur une prise médiane 12 comme illustré à la figure 1 ou directement en parallèle à l'étage d'entrée 7 comme le montre la figure 2, il apparaît que l'impédance de l'étage d'entrée 7 est shuntée par l'impédance de l'étage de sortie 8. Ainsi, quand l'interrupteur 14 est fermé, le modem présente une petite impédance ce qui facilite la transmission des signaux.

Dans une réalisation de l'invention particulièrement adaptée à des réseaux de domotique, l'impédance mesurée sur les bornes P et N est de l'ordre de 10 ohms quand l'interrupteur 14 est fermé et de l'ordre de 20 ohms quand il est ouvert.

L'invention s'applique notamment aux modems destinés à équiper des émetteurs-récepteurs dits maîtres et esclaves et montés dans des réseaux de domotique. Grâce à l'invention, l'impédance du modem est automatiquement adaptée au fonctionnement, ce qui permet d'améliorer la qualité du signal d'émission et de réception. Par ailleurs, lorsqu'il devient possible de transmettre un signal avec une adaptation d'impédance optimisée, on obtient une bande passante plus étroite et par conséquent un meilleur rapport de signal à bruit.

## Revendications

1. Modem destiné à équiper des émetteurs-récepteurs connectés à un réseau alternatif d'alimentation électrique et adaptés à contrôler, au moyen d'un signal véhiculé par le réseau, le fonctionnement d'appareils électriques d'une habitation, et comprenant un transformateur de couplage (1) présentant un étage primaire (2) dont des bornes de branchement P et N sont connectées aux bornes du réseau d'alimentation et un étage secondaire (3) branché au moyen d'un circuit de liaison (4) à un étage d'entrée (7) et à un étage de sortie (8) d'une unité de traitement de signal (5),
**caractérisé en ce qu'**il comprend en outre des moyens de changement automatique (13) de son impédance aux bornes P et N , pilotés par ladite unité de traitement (5) de sorte que l'impédance soit plus grande en réception qu'en émission.

2. Modem selon la revendication 1,
**caractérisé en ce que** les moyens de changement d'impédance (13) comprennent un interrupteur (14) monté dans le circuit de liaison (4) , ledit interrupteur (14) pouvant occuper deux états : soit un état fermé dans lequel l'étage de sortie (8) est relié au transformateur (1), soit un état ouvert dans lequel l'étage de sortie (8) est isolé.

3. Modem selon la revendication 2,
**caractérisé en ce que** l'unité de traitement (5) comprend un microprocesseur (6) relié à l'étage de sortie (8) et à une interface de commande de l'interrupteur (14), ledit microprocesseur étant adapté à délivrer un signal logique destiné, d'une part, à moduler le signal d'émission, et, d'autre part, à commander l'ouverture et la fermeture de l'interrupteur (14) de manière que ledit interrupteur (14) soit dans un état fermé lorsque le modem est en émission et dans un état ouvert lorsque le modem n'est pas en émission.

4. Modem selon la revendication 3,
**caractérisé en ce que** l'interface de commande de l'interrupteur est (14) adaptée à fermer ledit interrupteur (14) en réponse à une détection d'un état logique délivré par le microprocesseur (6) et correspondant à la transmission d'un signal.

5. Modem selon l'une quelconque des revendications 2 à 4,
**caractérisé en ce que** l'interrupteur (14) est réalisé à partir d'un transistor de type PNP et d'un transistor de type NPN montés tête-bêche.

6. Modem selon l'une quelconque des revendications 2 à 5,
**caractérisé en ce que** l'impédance du modem est de 10 ohms quand l'interrupteur(14) est fermé et de 20 ohms quand l'interrupteur est ouvert.
